(19) Europäisches Patentamt
European Patent Office
Office européen des brevets

(11) **EP 1 291 664 B1**

(12) **FASCICULE DE BREVET EUROPEEN**

(45) Date de publication et mention de la délivrance du brevet:
**28.10.2009 Bulletin 2009/44**

(51) Int Cl.:
***G01S 3/74*** *(2006.01)*

(21) Numéro de dépôt: **02292170.4**

(22) Date de dépôt: **03.09.2002**

(54) **Procédé et dispositif de radiogoniometrie cooperative en transmission**

Verfahren und Vorrichtung zur kooperativen Funkpeilung im Übertragungsmodus

Method and system for cooperative radio direction finding in transmission mode

(84) Etats contractants désignés:
**AT BE BG CH CY CZ DE DK EE ES FI FR GB GR IE IT LI LU MC NL PT SE SK TR**

(30) Priorité: **05.09.2001 FR 0111488**

(43) Date de publication de la demande:
**12.03.2003 Bulletin 2003/11**

(73) Titulaire: **Thales**
**92200 Neuilly Sur Seine (FR)**

(72) Inventeurs:
• **Ferreol, Anne,**
**Thales Intellectual Property**
**94117 Arcueil Cedex (FR)**

• **Delaveau, Francois,**
**Thales Intellectual Property**
**94117 Arcueil Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 866 568     EP-A- 1 031 847**
**FR-A- 2 764 074**

## Description

La présente invention concerne un procédé et un dispositif de radiogoniométrie coopérative en transmission pour des signaux comportant un signal de référence.

L'invention s'applique particulièrement au cas de signaux comportant un signal de synchronisation ou signal de référence, composé d'une suite de symboles connus définie par la norme de transmission utilisée au sein du système de transmission.

Par exemple, les signaux GSM (Global System for Mobile communications), composés de plusieurs signaux de référence, présentent cette caractéristique. Dans un tel contexte, un système de réception tel qu'une station de base peut réaliser une goniométrie sélective et associer une direction d'arrivée à une séquence de synchronisation. Les techniques de goniométrie sélective permettent d'isoler un émetteur parmi les autres à partir de la connaissance de son signal de référence. Il est ainsi possible de réaliser une goniométrie sélective par émetteur, ce qui permet de diminuer le risque d'ambiguïtés.

La demande de brevet EP-A-1 031 847 divulgue un procédé et un dispositif pour localiser en temps réel des émetteurs terrestres appartenant à un réseau de radiocommunications cellulaires de type TDMA.
Le dispositif comprend un réseau d'antennes et un calculateur permettant de mettre en oeuvre une synchronisation multi-voies pour déterminer les différentes sources d'émission, à calculer simultanément un angle de site et un angle d'élévation pour déterminer instantanément la direction d'arrivée des signaux radioéletriques des sources d'émission déterminées.

Le brevet FR 2 764 074 décrit un procédé permettant d'effectuer une goniométrie dans le cas de mono-utilisateur et pour des modulations linéaires ou des formes d'onde qui peuvent être approximées en modulations linéaires. Dans ce brevet, on émet des signaux numériques $s_e(t)$ modulés linéairement. Les symboles $a_1$, $a_2$, $a_3$, etc., associés au signal sont transmis à la période $T_s$ pour ensuite être filtrés par un filtre FIR (Finite Impulse Response) de réponse h(t).

Dans ces conditions, la relation entre le signal émis $s_e(t)$ et les symboles $a_n$ est la suivante :

$$s_e(t) = \sum_n h(t-nT_s)\, a_n \qquad\qquad (1)$$

où h(t) correspond au filtre de mise en forme.

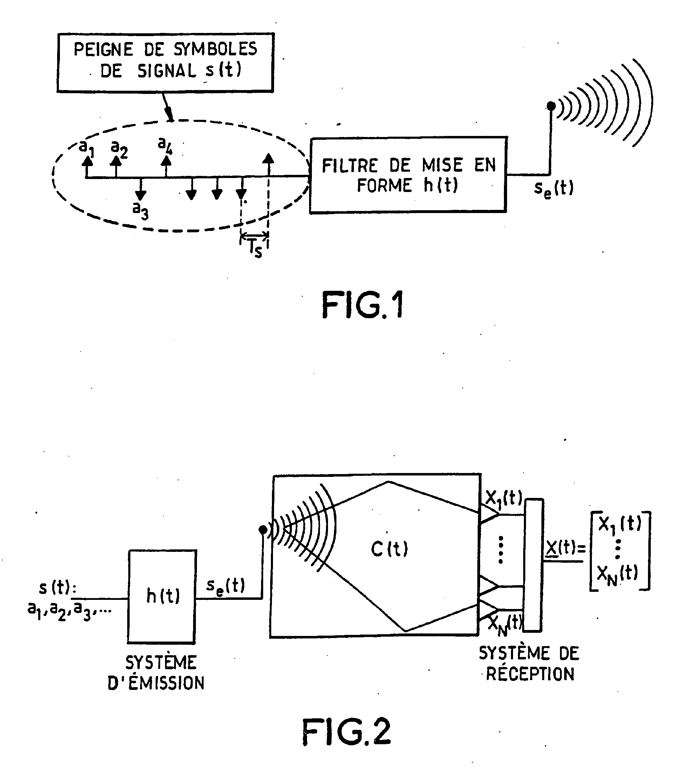

La figure 1 schématise le principe du procédé.

L'exemple donné dans ce brevet concerne principalement la norme GSM où le signal émis est une modulation de phase de type GMSK (Gaussian Minimum Shift Keying) tel que:

$$s_e(t) = \exp\left\{ j \sum_n \Phi(t-nT_s)\, a_n \right\} \qquad\qquad (2)$$

où $a_n$ correspond à un symbole émis à $T_s$ échantillons par symbole.

Pour que la norme GMSK fasse partie des modulations linéaires, les auteurs de ce brevet font l'approximation suivante :

$$s_e(t) \approx \sum_n C_0(t-nT_s)\, j^n\, b_n \quad \text{avec } b_n = \prod_{k=-\infty}^{n} a_k \qquad\qquad (3)$$

La linéarisation est réalisée, par exemple, en appliquant la méthode décrite dans le document intitulé « Exact and approximate construction of digital phase modulations by superposition of modulated pulse (AMP) » de Pierre André Laurent, IEEE trans. on communications Vol 34 (1986) pp 150-160.

Dans la suite de symboles $\{a_n\}$, il existe une suite de symboles $\{s_k\}$ tel que $a_{p+k\text{-}1}=\{s_k\}$ pour $1 \le k \le K$. La suite de symboles $\{s_k\}$ est définie par la norme de transmission et est appelée séquence d'apprentissage. En particulier la norme GSM comporte 8 séquences différentes composées de K=26 symboles.

Le signal $s_e(t)$ transite vers la $n^{ième}$ antenne d'un système de réception au travers d'un canal de propagation C(t) de filtre linéaire FIR. Dans ces conditions, il existe une relation de filtrage linéaire entre le peigne de symbole s(t) (tel que $s_e(t)=h(t)*s(t)$ où «*» désigne le produit de convolution) et les signaux capteurs $x_n(t)$, illustrée à la figure 2.

Sachant que $C(t)=[C_1(t) \ldots C_N(t)]^T$ la relation entre les symboles $a_n$ émis et le signal $\underline{x}(t)$ reçu s'exprime sous la forme :

$$\underline{x}(t)= C(t)^* s_e(t) = (C * h(t))^* s(t) = \sum_n G(t-nT_s)\, a_n + \underline{b}_0(t) \qquad (4)$$

où
pour $t=nT_s$, $s(t)= a_n$ et pour $t \neq nT_s$, $s(t)=0$.

$G(t)=C(t)*h(t)$ est un vecteur de dimension Nx1 et $\underline{b}(t)$ est le vecteur composé du bruit de fond des N récepteurs.

Le procédé divulgué dans le brevet FR 2 764 074 est décomposé en 3 étapes :

**1ière étape:** Numérisation du signal reçu $\underline{x}(t)$ à la période d'échantillonnage $T_e$. L'entrée du système étant composée des symboles $\{a_n\}$, $T_e$ doit être choisie pour que $T_s =P\, T_e$ où P est un entier. Ainsi en posant $G_{p-nP}=G((p-nP)T_e)$ la relation (4) devient :

$$\underline{x}(pT_e)= \sum_n G_{p-nP}\, a_n + \underline{b}_0(p\, T_e) \qquad (5)$$

Dans la description du brevet, les auteurs pose P=2. Le fait de choisir la période d'échantillonnage $T_e$ en fonction de la période symbole $T_s$ est une forte contrainte. Généralement, le matériel ne permet pas d'obtenir directement $T_s = P\, T_e$ (P entier). L'échantillonnage est effectué à $T'_e$ et par la suite pour avoir un échantillonnage à $T_e$, il est nécessaire d'effectuer des traitements numériques qui rééchantillonne le signal à $T_e$. Dans la norme GSM les signaux émis vérifient la relation $1/T_s = 270$kHz. Pour respecter les conditions de Shannon à la réception, le système les reçoit à $1/T_e = 500$kHz et $T_s / T_e = 500/270$ est de fait un non entier.

**2ière étape:** Procédure de synchronisation : L'objectif est de déterminer l'instant $t_0=pT_e$ d'apparition de la séquence d'apprentissage $\{s_k\}$ tel que $a_{p+k-1}=\{ s_k \}$ pour $1 \leq k \leq K$ :

$$\underline{x}((k+p)T_e)= \sum_n G_{k-nP}\, s_n + \underline{b}_0((k+p)\, T_e) \qquad (6)$$

Pour cela on considère que le peigne de symbole $s(n\, T_e)$ est le signal d'entrée et on cherche à maximiser en $\tau$ le critère de synchronisation suivant :

$$Cri(\tau)= \hat{r}_{xs}(\tau)^H\, R_{xx}^{-1}(\tau)\, \hat{r}_{xs}(\tau)$$

$$\text{Avec}\quad \hat{r}_{xs}(\tau) = \frac{1}{KP} \sum_{k=1}^{KP} \underline{x}(k\, T_e +\tau)\, s(k\, T_e)^* \quad \text{et}$$

$$R_{xx}(\tau) = \frac{1}{KP} \sum_{k=1}^{KP} \underline{x}(k\, T_e +\tau)\, \underline{x}(k\, T_e +\tau)^H \qquad (7)$$

K : nombre de symboles de la séquence d'apprentissage et $s(n\, T_e)=s_{kP}$ pour n=kP et $s(n\, T_e)=0$ pour $n \neq kP$ et où $\underline{x}^H$ désigne le transposé et conjugué de $\underline{x}$.

**3ième étape** : On utilise les signaux $\underline{x}(t+t_k)$ et les peignes de symboles $s(n\, T_e)$ associés à une source afin d'isoler cette dernière et d'effectuer une goniométrie sur une seule source à l'instant $t_0=p\, T_e$. En utilisant le signal reçu $\underline{x}$ $(t+t_k)$ et un seul peigne de symboles $s(n\, T_e)$ on dit que le procédé est mono-utilisateur.

Le procédé selon l'art antérieur, s'il s'avère performant, présente toutefois certaines limitations. Il s'applique pour des formes d'onde linéarisables ou qui peuvent être approximées sous une telle forme, et dans des contextes mono-utilisateur.

Le procédé selon l'invention repose sur une nouvelle approche qui consiste notamment à exploiter le signal ou séquence de référence contenant des symboles propres à une norme utilisée ou à un format donné pour le signal, le signal reçu et la connaissance des instants d'arrivée des , différentes séquences de référence, pour déterminer les coordonnées d'une source à partir de la mesure de son incidence, opération connue habituellement sous l'expression goniométrie.

Dans la description les termes « émetteurs », « utilisateurs » ou « utiles » désignent un même objet.

L'invention concerne un procédé de radiogoniométrie coopérative en transmission dans un système de radiogoniométrie pour système de radiocommunication comportant une ou plusieurs sources d'émission ou émetteurs, le signal émis comprenant une séquence de référence composée d'une suite de symboles $\{S_k\}$, le récepteur comportant au moins un réseau de plusieurs capteurs couplés à un radiogoniomètre. Il est caractérisé en ce qu'il comporte au moins les étapes suivantes :

a) déterminer le ou les signaux de référence $d_i(t)$ associés à un émetteur m à partir des symboles et de la modulation définis par le format des signaux,

b) définir l'instant d'arrivée $t_k$ d'une ou de plusieurs signaux de références,

c) à partir du signal x(t) reçu sur les capteurs, des instants d'arrivée $t_k$ et du ou des signaux de référence $d_i(t)$ issus de l'étape a), déterminer la ou les incidences ou direction d'arrivée pour un émetteur donné des signaux issues pour un émetteur m donné, estimer la matrice de transfert $H_u=[H_1{}^u \ldots H_{M0}{}^u]$ puis extraire de $H_u$ les matrices $H_m{}^u$ associées à chacun des $M_0$ émetteurs utiles, le procédé estimant $H_u$ au sens des moindres carré en minimisant l'écart entre $H_u\, r^u{}_L(t)$ et x(t) et en réalisant ce moindre carré entre les instants $t_{min}$ et $t_{max}$:

$$\hat{H}_u = \hat{R}_{xr}{}^u \left(\hat{R}_{rr}{}^u\right)^{-1} \qquad\qquad (17)$$

avec

$$\hat{R}_{xr}{}^u \equiv \frac{1}{t_{max} - t_{min}} \sum_{t=t_{min}}^{t_{max}} x(t)\, r^u{}_L(t)^H \quad et \quad \hat{R}_{rr}{}^u \equiv \frac{1}{t_{max} - t_{min}} \sum_{t=t_{min}}^{t_{max}} r^u{}_L(t)\, r^u{}_L(t)^H$$

à partir de la matrice $H_u$ estimer la matrice de canal $H_m{}^u$ du ième pour en déduire ensuite les incidences dudit émetteur.

L'étape a) est réitérée autant de fois qu'il y a d'émetteurs $M_0$ dans le système.

Il peut comporter une étape de séparation des émetteurs $M_0$ en estimant la matrice de transfert du canal de transmission $H^u$ de l'ensemble des utiles et en extrayant de cette matrice les matrices de transfert $H_m{}^u$ du canal associées à un utile m afin de déterminer le vecteur d'observation $\underline{x}^m(t)$ correspondant.

L'étape c) est réalisée par exemple à l'aide d'une goniométrie par blanchiment mise en oeuvre sur les vecteurs d'observations $\underline{x}^m(t)$ ou par projection.

L'étape a) peut être effectuée sur une durée $\delta t' > \delta t$, où $\delta t$ est la durée de base du signal de référence.

On peut déterminer un filtre spatial $W_m$ à partir du signal de référence $d_m(t)$ d'un émetteur m afin de déduire le signal $s_m(t)$ provenant de l'émetteur avant d'appliquer une étape de goniométrie.

Le procédé s'applique notamment dans des systèmes de radiocommunication pour des signaux de type GSM ou UMTS.

L'invention concerne aussi un dispositif de radiogoniométrie comportant au moins des moyens adaptés à mettre en oeuvre les étapes du procédé précité.

L'objet de l'invention présente notamment les avantages suivants :

- la possibilité d'effectuer une goniométrie, dans un contexte plus large (mono ou multi-utilisateurs, mono ou multi-trajets) que celui offert par les procédés de l'art antérieur,
- en choisissant l'intervalle de travail ou d'observations, la possibilité d'améliorer les résultats de goniométrie,
- par modification, par exemple en allongeant la durée des signaux de référence, la possibilité d'améliorer les résultats de goniométrie,
- la possibilité de localiser des mobiles pour émettre de façon directive en direction de chaque mobile, à partir de la connaissance de la direction d'arrivée des mobiles goniométrés,
- la possibilité de localiser des mobiles ou des stations de bases dans un contexte de contrôle du spectre,
- la diminution de la puissance d'émission à portée constante ou l'augmentation de la portée d'émission, à puissance constante et de fait la diminution du brouillage envers les autres cellules,

- le procédé est appliqué pour différentes formes d'ondes, sans traitement spécifique.
- en utilisant des techniques de blanchiment ou de projection qui permettent de mieux réjecter les interférences, la possibilité d'améliorer les résultats de goniométrie.

D'autres caractéristiques et avantages de l'invention apparaîtront dans la description qui suit, donnée à titre illustratif et nullement limitatif, faite en regard des dessins, annexés qui représentent :

- Les figures 1 et 2, le principe d'émission et de réception d'une modulation linéaire selon l'art antérieur,
- La figure 3, un système de localisation à partir d'une station de base,
- La figure 4, un synoptique du principe d'émission-réception selon l'invention,
- La figure 5, la forme d'un signal $s_e(t)$ émis par une source m comportant un signal de référence d(t),
- La figure 6, le résultat de la synchro dans un contexte multi-utilisateurs,
- La figure 7, un synoptique du processus de détection et de goniométrie multi-utilisateurs,
- La figure 8 un schéma représentant l'allongement de la durée du signal de référence,
- Les figures 9 et 10 deux exemples de mise en oeuvre dans le cas de multi-utilisateurs,
- Les figures 11, 12, 13 et 14 des résultats d'essais.

La description qui suit donnée à titre illustratif et nullement limitatif concerne un dispositif de radiogoniométrie ayant notamment pour objectif de goniométrer les sources sur un avion et/ou au sol.

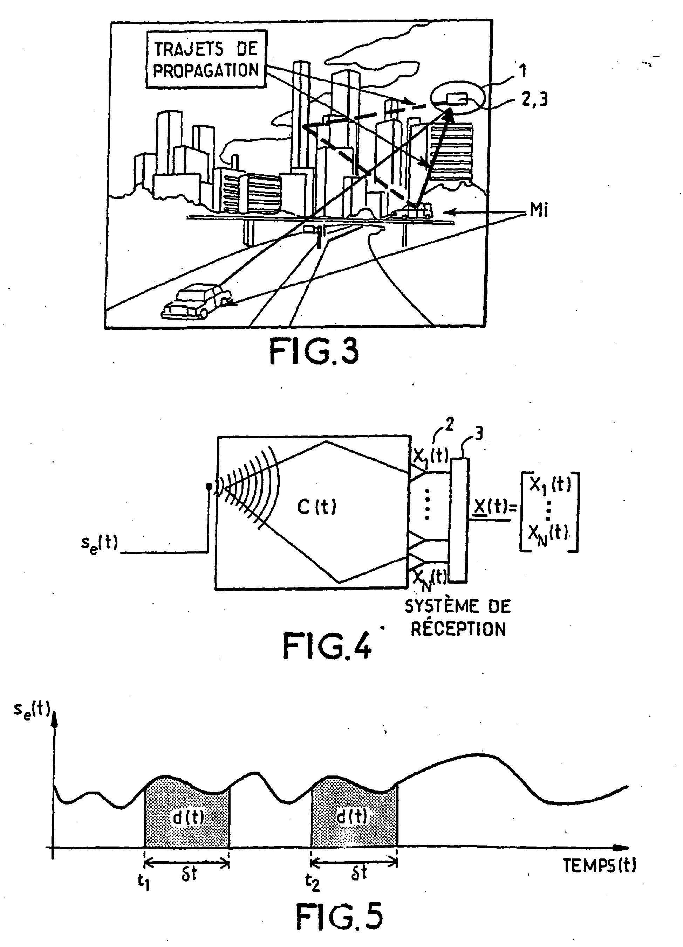

La figure 3 schématise un exemple de système de localisation d'un ou de plusieurs mobiles Mi à partir d'une station de base. La propagation des signaux s'effectue selon des trajets directs (représentés en traits plein sur la figure) ou indirects suite aux différentes réflexions sur des obstacles (traits en pointillés).

La station de base 1 comporte par exemple un réseau d'antennes 2, derrière lequel se trouve un système de réception 3 des signaux issus des antennes. Un processeur 4 adapté à exécuter notamment les étapes du procédé selon l'invention détaillé ci-après est relié au système de réception.

La figure 4 schématise le principe d'émission-réception mis en oeuvre dans le procédé selon l'invention. Les éléments identiques à ceux de la figure 2 portent les mêmes références. Le signal émis $s_e(t)$ se propage par un canal de transmission C(t) avant d'être reçu sur le réseau de capteurs de la station de base.

Le signal émis $s_e(t)$, dont un exemple de forme et de structure est donné à la figure 5, comporte plusieurs signaux de référence d(t) qui apparaissent plusieurs fois, à des instants donnés $t_1$, $t_2$, ...,. Le signal de référence d(t) est composé par exemple de la suite de symboles $\{s_k\}$ pour $1 \leq k \leq K$, où K est le nombre de symboles de la séquence. La durée $\delta t$ du signal de référence d(t) dépend alors du nombre K, du temps symbole $T_s$ et de la période d'échantillonnage $T_e$.

**Etape a) du procédé : construction du signal de référence d(t)**

Le procédé construit le signal de référence d(t) à partir des symboles de la séquence d'apprentissage $\{s_k\}$, du temps symbole $T_s$ du signal émis, de la période d'échantillonnage $T_e$ et de la modulation émise (norme utilisée pour les signaux et qui peut être la forme d'onde h(t) dans le cas des modulations linéaire).

Dans le cas multi-utilisateurs, avec $M_0$ utilisateurs ou utiles, l'étape a) est réitérée autant de fois qu'il y a d'utilisateurs, afin de déterminer pour chacun d'eux les signaux de référence $d_1(t)...d_{M0}(t)$. Ceci permet de réaliser une goniométrie multi-utilisateurs en utilisant la présence des $M_0$ signaux de références entre les instants $t_k$ et $t_k + \delta t$ où $\delta t$ est la durée des signaux de référence.

Par exemple, pour les signaux GSM, on calcule la référence d(t) en utilisant l'expression (2) précitée.

Pour les signaux de type UMTS le procédé détermine la séquence de référence d(t) à partir des séquences d'étalement de spectre connues de l'Homme du métier et de l'expression (1) où h(t) est un filtre de Nyquist de roll-off 0.25.

Cette étape a) est par exemple suivie d'une étape de numérisation du signal reçu $\underline{x}(t)$ à la période d'échantillonnage $T_e$. Dans cette étape il n'est pas nécessaire de choisir $T_e$ tel que $T_s = PT_e$ où P est un entier.

**Etape b) ou étape de synchronisation**

L'étape suivante consiste à déterminer, dans le signal reçu $\underline{x}(t)$, les instants $t_1$, $t_2$ etc .. d'apparition du signal de référence d(t) tel que d'après la relation (4) :

$$\underline{x}(t+t_k)= \sum_n C(t)\, d(t-nT_e) + \underline{b}_0(t+t_k) \text{ pour } 0<t<\delta t \qquad (8)$$

car $\underline{x}(t)= C(t)*s_e(t)+ \underline{b_0}(t)$ et $s_e(t+t_k)=d(t)$ pour $0<t<\delta t$. Pour cela le procédé considère que le signal de référence $d(t)$ est le signal d'entrée et cherche à maximiser en $\tau$ le critère de synchronisation suivant :

$$Cri(\tau)= \hat{r}_{xd}(\tau)^H R_{xx}^{-1}(\tau) \ \hat{r}_{xd}(\tau)$$

$$\text{avec} \quad \hat{r}_{xd}(\tau)=\frac{1}{\delta t} \sum_{t=O}^{\delta t} \ \underline{x}(t+\tau) \ d(t)^* \ \text{ et } \ R_{xx}(\tau)=\frac{1}{\delta t} \sum_{t=O}^{\delta t} \ \underline{x}(t+\tau) \ \underline{x}(t+\tau)^H \qquad (9)$$

**Etape c) détermination des directions d'arrivée ou goniométrie**

On utilise les signaux $\underline{x}(t+t_k)$ et $d(t)$ associés à une source m afin de l'isoler et effectuer ainsi une goniométrie sur une seule source à un instant donné $t_k$.

La mise en oeuvre de l'étape c) dépend notamment du contexte d'utilisation, par exemple dans le cadre de mono-utilisateur ou de multi-utilisateurs. La description différencie ces deux cas.

Application du procédé dans le cas mono-utilisateur

Le procédé recherche tout d'abord les instants de synchronisation à $t_k=pT_e$ par exemple en utilisant la méthode décrite dans le brevet FR 2 715 488. Connaissant les différents instants de synchronisation, les instants d'apparition $t_k$ de la séquence d'apprentissage, il réalise la goniométrie, par exemple selon un procédé de type MUSIC connu de l'Homme du métier sur le signal $d(t)$ modulé reconstruit issu de l'étape a) et les observations $\underline{x}(t+t_k)$ sur l'intervalle de temps $0 \leq t \leq \delta t$. Un tel procédé est par exemple décrit dans le document intitulé « A signal subspace approach to multiple emitters location and spectral estimation », de R.O.Schmidt, PhD Thesis, Stanford University, CA, Nov 1981].

Application du procédé dans le cas multi-utilisateurs

Dans un contexte plus général, on peut vouloir rechercher dans le signal reçu $\underline{x}(t)$, plusieurs sources qui sont associées à des signaux de références $d_i(t)$ différents les uns des autres. En GSM, par exemple, l'idée est de chercher des sources associées aux 8 séquences TSC possibles, $1 \leq i \leq 8$. Dans ces conditions, on nommera $t_k(i)$ les instants de synchronisation associés au $i^{ème}$ signal de synchronisation $d_i(t)$.

**Recherche du nombre $M_0$ d'utiles ou d'émetteurs utiles**

Le procédé va dans un premier temps rechercher le nombre $M_0$ d'utiles. Pour illustrer le processus mis en oeuvre, la description considère le cas où il y a 2 utiles ou émetteurs.

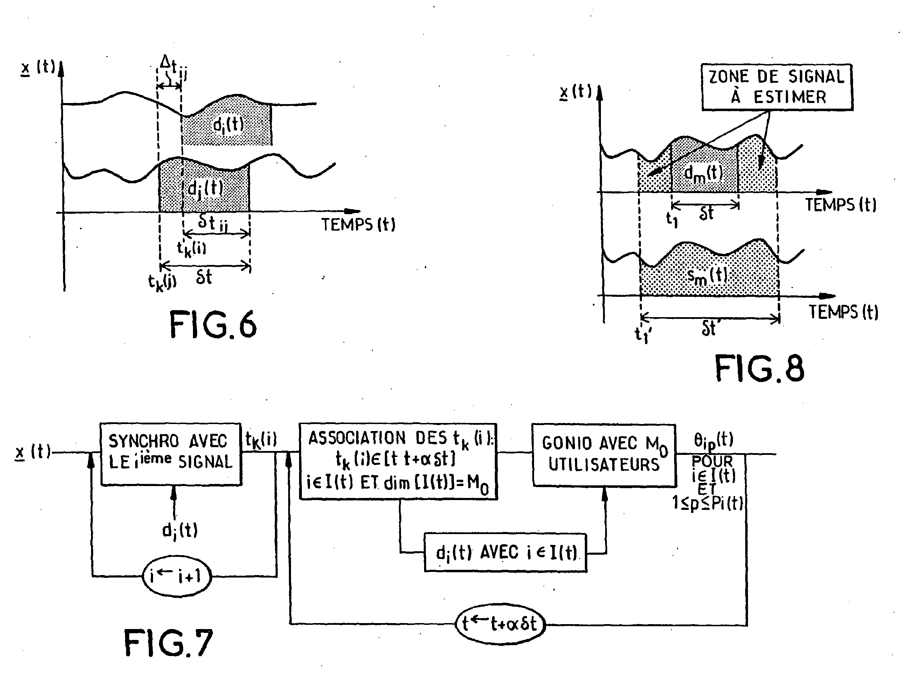

La figure 6 montre la présence de 2 signaux de références $d_i(t)$ et $d_j(t)$ qui sont détectés aux instants respectifs $t_k(i)$ et $t_k(j)$ et qui correspondent à 2 utilisateurs ou 2 émetteurs.

Si l'écart $\Delta t_{ij}= t_k(j)- t_k(i)$ est suffisamment faible, par exemple, $\Delta t_{ij}< \alpha \, \delta t$ (typiquement $\alpha \approx 0.1$), on peut appliquer un algorithme multi-utilisateurs (par exemple en mettant en oeuvre une technique de gonio multi-utilisateurs en utilisant les signaux $d_i(t)$ et $d_j(t)$ dans le modèle de l'équation (16) entre les instants $t_k(i)$ et $t_k(j)+\delta t$, période temporelle ou tranche de signal
où les deux utilisateurs sont présents. D'après l'expression (6), le signal $\underline{x}(t+t_k(i))$ s'écrit de la façon suivante :

$$\underline{x}(t+t_k(i))= \sum_{n=-L/2}^{L/2} C_i(t) \, d_l(t-nTe) \ + \ \sum_{n=-L/2}^{L/2} C_j(t+\Delta t_{ij}) \, d_j(t+\Delta t_{ij}-nT_e) + \underline{b^2}(t)$$

$$\text{pour} \ \ 0<t<\delta t_{ij} \qquad (10)$$

où $\delta t_{ij}$ correspond à la tranche de signal utilisée pour traiter en multi-utilisateurs les $i^{ème}$ et les $j^{ième}$ signaux.
Où $\underline{b^2}(t)$ est un bruit composé du bruit de fond $\underline{b_0}(t)$ et des brouilleurs n'ayant pas de signal de synchronisation, suffisamment proche des instants $t_k(i)$ et $t_k(j)$. Cette expression peut aussi s'exprimer sous la forme suivante (11) :

$$\underline{x}(t+t_k(i)) = \underbrace{\sum_{m=1}^{M_0} H_m^u \, \underline{r}^m_L(t)}_{\textbf{Utiles}} + \underbrace{\underline{b}^{M0}(t)}_{\substack{\textbf{Bruit de} \\ \textbf{fond+Brouilleurs}}} \qquad \text{pour } 0 < t < \delta t_{ij}$$

Où $H_m^u$ représente la matrice du canal de propagation pour l'utile m et $\underline{r}^m_L(t)$ son vecteur de référence.
Pour $M_0 = 2$, les $H_m^u$ et les $\underline{r}^m_L(t)$ vérifient :

$$\underline{r}^1_L(t) = \begin{bmatrix} d_1(t - (L/2)Te) \\ . \\ d_1(t + (L/2)Te) \end{bmatrix} \quad \text{et} \quad \underline{r}^2_L(t) = \begin{bmatrix} d_2(t + \Delta t_{12} - (L/2)Te) \\ . \\ d_2(t + \Delta t_{12} + (L/2)Te) \end{bmatrix} \qquad (12)$$

et

$$H_1^u = [\, C_1(t-(L/2)T_e) \, \dots \, C_1(t+(L/2)T_e)]$$

$$H_2^u = [\, C_2(t-(L/2)T_e+\Delta t_{12}) \, \dots \, C_2(t+(L/2)T_e+\Delta t_{12})] \qquad (13)$$

Où L est le nombre de décalages temporels du signal de référence. L'optimum est par exemple de choisir L égal à l'étalement temporel du canal de l'émetteur s'étalant le plus.

De façon plus générale, le nombre d'utiles $M_0$ est égal au nombre d'instants $t_k(i)$ appartenant à l'intervalle temporel $[t_0 \; t_0 + \Delta t_{ij}\,[$, où $\Delta t_{ij} = \alpha \, \delta t$. La valeur de $\alpha$ est typiquement $\alpha \approx 0.1$ et $\delta t$ est la durée des signaux de synchronisation.

Le processus de goniométrie et de détection multi-utilisateurs est alors illustré à la figure 7.

En résumé, le procédé dans le cas d'un contexte multi-utilisateurs :

- Détermine les différents instants de synchronisation $t_k(i)$ pour tous les signaux i,
- Détermine le nombre d'utiles ou d'émetteurs $M_0$ ,
- Effectue la goniométrie pour chaque utile (émetteur) $M_0$ en connaissant le signal de référence $d_i(t)$ associé et les instants de synchronisation $t_k(i)$.

L'étape de goniométrie est réalisée par exemple selon différentes méthodes dont certaines sont données ci-après à titre indicatif et nullement limitatif. Avant de mettre en oeuvre la goniométrie, le procédé estime les différents canaux de propagation et sépare les utiles.

Pour cela, le procédé considère les brouilleurs corrélés à l'utile comme des utiles. On se trouve ainsi dans un contexte multi-utilisateurs avec $M_0$ émetteurs utiles et $M-M_0$ émetteurs brouilleurs.

Après la séparation des utiles, l'expression du signal $\underline{x}^m(t)$ reçu sur le réseau de capteurs et provenant de l'utilisateur m, est équivalente à celle du mono-utilisateur et il est alors possible d'appliquer sur ce signal un algorithme de goniométrie mono-utilisateur.

Dans ces conditions le signal reçu sur les capteurs s'exprime de la manière suivante

$$\underline{x}(t) = \sum_{m=1}^{M_0} H_m^u \, \underline{r}^m_L(t) + \underline{b}^{M0}(t) \qquad (14)$$

$$\text{Où } \underline{\boldsymbol{b}}^{M0}(t) = \sum_{m'=M_0+1}^{M} H_{m'} \, \underline{\boldsymbol{s}}^{m'}{}_{L}(t) + \, \boldsymbol{b}(t)$$

Les matrices représentatives du canal de transmission $H_m{}^u$ et $H_{m'}$ ont l'expression suivante (15):

$$H_m{}^u = \sum_{p=1}^{P_m} \rho_{mp} \, \underline{\boldsymbol{a}}(u_{mp}) \, \boldsymbol{h_{mp}}{}^{uT} = A_m \, B_m{}^u \quad \text{et} \quad H_{m'} = \sum_{p=1}^{P_{m'}} \rho_{m'p} \, \underline{\boldsymbol{a}}(u_{m'p}) \, \boldsymbol{h_{m'p}}{}^{T} = A_{m'} \, B_{m'}$$

Où $A_m = [\, \underline{\boldsymbol{a}}(u_{m1})... \, \underline{\boldsymbol{a}}(u_{mPm}) \,]$ est la matrice des vecteurs directeurs des multi-trajets du $m^{\text{ième}}$ émetteur, $B_m{}^{uT} = [\rho_{m1}\boldsymbol{h_{m1}}^{u}...\rho_{mPm}\boldsymbol{h_{mPm}}^{u}]$ et $B_{m'}{}^{T} = [\rho_{m'1}\boldsymbol{h_{m'1}}...\rho_{m'Pm'}\boldsymbol{h_{m'Pm}}]$, $u_{mp}$ est l'incidence du $p^{\text{ième}}$ trajet du $m^{\text{ième}}$ utilisateur. L'expression (14) de $\underline{x}(t)$ peut s'écrire de la manière suivante :

$$\underline{x}(t) = H_u \, \underline{\boldsymbol{r}}^{u}{}_{L}(t) \quad + \underline{\boldsymbol{b}}^{M0}(t) \tag{16}$$

où $H_u$ représente la matrice des canaux de propagation des $M_0$ utiles et $\underline{\boldsymbol{r}}^{u}{}_{L}(t)$ le vecteur de référence multi-utilisateurs associé.

$$\text{avec } H_u = [H_1{}^{u} \, ... \, H_{M0}{}^{u}] \quad \text{et} \quad \underline{\boldsymbol{r}}^{u}{}_{L}(t) = \begin{bmatrix} \underline{\boldsymbol{r}}^{1}{}_{L}(t) \\ . \\ \underline{\boldsymbol{r}}^{M_0}{}_{L}(t) \end{bmatrix} = \begin{bmatrix} d_1(t-(L/2)Te) \\ . \\ d_1(t+(L/2)Te) \\ . \\ d_{M_0}(t-(L/2)Te) \\ . \\ d_{M_0}(t+(L/2)Te) \end{bmatrix}$$

L'exposant u fait référence aux émetteurs dits utiles et L correspond au nombre de décalage temporel du signal de référence. L'optimum est de choisir L égal à l'étalement temporel du canal de l'émetteur s'étalant le plus.

L'objectif de la technique multi-utilisateurs consiste à séparer tout d'abord les $M_0$ signaux utiles pour ensuite appliquer une technique de type mono-utilisateur sur chacun des émetteurs utiles.

### *Séparation des émetteurs ou utiles*

La séparation des émetteurs consiste à estimer la matrice de transfert $H_u = [H_1{}^{u} \, ... \, H_{M0}{}^{u}]$ puis à extraire de $H_u$ les matrices $H_m{}^u$ associées à chacun des $M_0$ émetteurs utiles. Le procédé estime $H_u$ au sens des moindres carré comme dans le cas mono-utilisateur. Ainsi d'après l'expression (16) le procédé estime $H_u$ en minimisant l'écart entre $H_u \, \underline{\boldsymbol{r}}^{u}{}_{L}(t)$ et $\underline{x}(t)$. En réalisant ce moindre carré entre les instants $t_{min}$ et $t_{max}$ on obtient :

$$\hat{H}_u = \hat{R}_{xr}{}^{u} \left( \hat{R}_{rr}{}^{u} \right)^{-1} \tag{17}$$

avec

$$\hat{R}_{xr}{}^{u} = \frac{1}{t_{max} - t_{min}} \sum_{t=t_{min}}^{t_{max}} \underline{x}(t)\, \underline{r}^{u}{}_{L}(t)^{H} \quad \text{et} \quad \hat{R}_{rr}{}^{u} = \frac{1}{t_{max} - t_{min}} \sum_{t=t_{min}}^{t_{max}} \underline{r}^{u}{}_{L}(t)\, \underline{r}^{u}{}_{L}(t)^{H}$$

En posant $\underline{b}^{M0}(t) = \underline{x}(t) - H_{u}\, \underline{r}^{u}{}_{L}(t)$ on en déduit que la matrice de covariance de ce vecteur bruit+brouilleurs vaut :

$$\hat{R}_{bb}{}^{u} = \frac{1}{t_{max} - t_{min}} \sum_{t=t_{min}}^{t_{max}} \underline{b}^{M0}(t)\, \underline{b}^{M0}(t)^{H} = \hat{R}_{xx} - \hat{H}_{u}\, \hat{R}_{xr}{}^{u\,H} = \hat{R}_{xx} - \hat{R}_{xr}{}^{u}\left(\hat{R}_{rr}{}^{u}\right)^{-1} \hat{R}_{xr}{}^{u\,H}$$

$$\text{avec } \hat{R}_{xx} = \frac{1}{t_{max} - t_{min}} \sum_{t=t_{min}}^{t_{max}} \underline{x}(t)\, \underline{x}(t)^{H}$$

$$\boxed{\hat{R}_{bb}{}^{u} = \hat{R}_{xx} - \hat{R}_{xr}{}^{u}\left(\hat{R}_{rr}{}^{u}\right)^{-1} \hat{R}_{xr}{}^{u\,\dagger}} \qquad\qquad (18)$$

Comme les matrices $\hat{H}_{m}{}^{u}$ sont des sous-blocs de la matrice $\hat{H}_{u}$ en vérifiant $\hat{H}_{u} = [\hat{H}_{1}{}^{u} \dots \hat{H}_{M0}{}^{u}]$ on les extrait directement de $\hat{H}_{u}$ en sélectionnant les bonnes colonnes. On a donc séparé les signaux utiles et estimé la matrice de covariance $\hat{R}_{bb}{}^{u}$ de la composante bruit+brouilleurs. On remarque que pour estimer les matrices $\hat{R}_{bb}{}^{u}$ et $\hat{H}_{m}{}^{u}$ on fait intervenir la matrice $\hat{R}_{rr}{}^{u}$ qui est la matrice de covariance du vecteur $\underline{r}^{u}{}_{L}(t)$. Cette matrice a, d'après (16), la structure suivante :

$$\hat{R}_{rr}{}^{u} = \begin{bmatrix} \hat{r}_{11}(0) & . & \hat{r}_{11}(L)^{*} & . & \hat{r}_{M_{0}1}(L)^{*} \\ . & . & & & \\ \hat{r}_{11}(L) & & \hat{r}_{11}(0) & & \\ . & & & . & \\ \hat{r}_{M_{0}1}(0) & . & \hat{r}_{M_{0}1}(-L) & \hat{r}_{M_{0}M_{0}}(0) & \\ . & & & . & \\ \hat{r}_{M_{0}1}(L) & . & \hat{r}_{M_{0}1}(0) & . & \hat{r}_{M_{0}M_{0}}(L_{T}) & . & \hat{r}_{M_{0}M_{0}}(0) \end{bmatrix} \qquad (19)$$

On voit que la matrice fait intervenir des termes $\hat{r}_{ij}(T)$ d'intercorrélation entre les signaux de référence $d_{i}(t)$ et $d_{j}(t-T)$ tel que :

$$\hat{r}_{ij}(T) = \frac{1}{t_{max} - t_{min}} \sum_{t=t_{min}}^{t_{max}} d_{i}(t)\, d_{j}(t-T)^{*} \qquad\qquad (20)$$

Dans ces conditions, la méthode multi-utilisateurs exploite les coefficients de corrélations $\hat{r}_{ij}(T)$ entre les signaux de référence, non nécessairement nuls. Cette remarque permet de vérifier intuitivement que l'utilisation des coefficients $\hat{r}_{ij}(T)$ est nécessaire pour réaliser la séparation de signaux de références $d_{i}(t)$ et $d_{j}(t)$ dans le cas corrélé.

A partir de la connaissance de la matrice de transfert $H_{m}{}^{u}$ du $m^{\text{ième}}$ émetteur utile on peut constituer un vecteur observation $\underline{x}^{m}(t)$ en ayant réjecté les autres émetteurs utiles. On effectue d'après (14) la transformation suivante :

$$\underline{x}^m(t) = \underline{x}(t) - \sum_{m' \neq m} H_{m'}{}^u \, \underline{r}^{m'}{}_L(t)$$

$$\Downarrow$$

$$\underline{x}^m(t) = H_m{}^u \, \underline{r}^m{}_L(t) + \underline{b}^{M0}(t) \tag{21}$$

L'expression du signal $\underline{x}^m(t)$ est équivalente à celle du cas mono-utilisateur où $M_0=1$ et le procédé applique sur le signal $\underline{x}^m(t)$ un algorithme de goniométrie mono-utilisateur dont deux exemples sont donnés ci-après à titre illustratif et nullement limitatif.

### *Goniométrie par blanchiment*

Sachant que la matrice de transfert vaut $H_m{}^u = A_m \, B_m{}^u$ et en supposant que $\underline{r}^u{}_L(t)$ et $\underline{b}^{M0}(t)$ soient décorrélés, la matrice de covariance $R_{xx}{}^m$ du signal $\underline{x}^m(t)$ a la structure suivante d'après les expressions (21) et (15):

$$R_{xx}{}^m = E[\underline{x}^m(t) \, \underline{x}^m(t)^H] = A_m \, R_{sm}{}^u \, A_m{}^H + R_{bb}{}^u \tag{22}$$

avec

$$R_{sm}{}^u = B_m{}^u \, E[\underline{r}^m{}_L(t) \, \underline{r}^m{}_L(t)^H] \, B_m{}^{u \, H}$$

Où $R_{bb}{}^u$ est la matrice de covariance du signal $\underline{b}^{M0}(t)$ dont l'expression est celle de la formule (18). La matrice $A_m$ est constituée des vecteurs directeurs $\underline{a}(u_{mp})$ du $p^{ième}$ trajet du $m^{ième}$ émetteur utile. Comme $R_{bb}{}^u$ est différent de $\sigma^2 I$ et que cette matrice est connue on applique la méthode MUSIC en blanchissant les observations $\underline{x}^m(t)$ par la matrice $R_{bb}{}^u$. D'après (21) la matrice $R_{xx}{}^m$ peut s'écrire de la façon suivante :

$$R_{xx}{}^m = H_m{}^u \, R_{rr}{}^m \, H_m{}^{u \, H} + R_{bb}{}^u \quad \text{avec} \quad R_{rr}{}^m = E[\underline{r}^m{}_L(t) \, \underline{r}^m{}_L(t)^H] \tag{23}$$

Dans ces conditions les étapes de l'algorithme sont les suivantes :

**1ier étape** : Calcul de $\hat{R}_{xx} = E[\underline{x}(t) \, \underline{x}(t)^H]$, $\hat{R}_{xr}{}^u = E[\underline{x}(t) \, \underline{r}^u{}_L(t)^H]$ et

$$\hat{R}_{rr}{}^u = E[\underline{r}^u{}_L(t) \, \underline{r}^u{}_L(t)^H]$$

**2ième étape :** Calcul de la matrice de transfert $\hat{H}_u = \hat{R}_{xr}{}^u \, (\hat{R}_{rr}{}^u)^{-1}$

**3ième étape :** Extraction des matrices estimées des canaux de propagation pour chacun des émetteurs m $\hat{H}_m{}^u$ pour $1 \leq m \leq M_0$ de la matrice $\hat{H}_u$ sachant que $\hat{H}_u = [\hat{H}_1{}^u \ldots \hat{H}_{M0}{}^u]$

**4ième étape :** Calcul de la matrice de bruit $\hat{R}_{bb}{}^u = \hat{R}_{xx} - \hat{R}_{xr}{}^u \, (\hat{R}_{rr}{}^u)^{-1} \, \hat{R}_{xr}{}^{u \, H}$ Pour chaque émetteur ou utile m de matrice de transfert $\hat{H}_m{}^u$ On initialise par m=1 :

**5ième étape :** Calcul de $\hat{R}_{xx}{}^m = \hat{H}_m{}^u \, \hat{R}_{rr}{}^m \, \hat{H}_m{}^{uH} + \hat{R}_{bb}{}^u$ avec $\hat{R}_{rr}{}^m = E[\underline{r}^m{}_L(t) \, \underline{r}^m{}_L(t)^H]$

**6ième étape :** Blanchiment de $\hat{R}_{xx}{}^m$ par $\hat{R}_{bb}{}^u$ tel que : $R_{xx}{}^{bm} = W^{1/2} \hat{R}_{xx}{}^m W^{-1/2H}$ avec $\hat{R}_{bb}{}^u = W^{1/2} W^{1/2H}$

**7ième étape :** Application de MUSIC sur $R_{xx}{}^{bm}$ avec les vecteurs directeurs $\underline{a}^b(u) = W^{-1/2} \, \underline{a}(u)$ pour estimer les incidences $u_{mp}$ pour $1 \leq p \leq P_m$ des multi_trajets du $m^{ième}$ émetteur.

**8ième étape :** m=m+1

**9ième étape :** si $m \leq M_0$ retour à la 5ième étape.

En sortie le procédé possède les incidences $U_{ip}(t_k(i))$ associé au $k^{ième}$ instants du $p^{ième}$ trajet du $i^{ième}$ signal de référence de cette source. Les incidences $u_{ip}(t)$ peuvent soit être des azimuts $\theta_{ip}(t)$ pour une goniométrie 1D soit être le couple de paramètres $(\theta_{ip}(t), \Delta_{ip}(t))$ pour une goniométrie 2D où $\Delta_{ip}(t)$ est l'angle de site.

**Goniométrie par projection**

Comme dans le cas mono-utilisateur le procédé utilise par exemple une méthode par projection. En effet sachant que $H_m{}^u = A_m B_m{}^u$ , l'expression de $\underline{x}^m(t)$ est la suivante d'après (21):

$$\underline{x}^m(t) = A_m B_m{}^u \underline{r}^m{}_L(t) + \underline{b}^{M0}(t) \qquad (24)$$

où la matrice $A_m = [\underline{a}(u_{m1})... \underline{a}(u_{mP_m})]$ est constituée des vecteurs directeurs $\boldsymbol{a}(u_{mp})$ des multi-trajets du $m^{ième}$ émetteur utile. Sachant d'après (15) que $H_{m'} = A_{m'} B_{m'}$, l'expression des signaux brouilleurs $\underline{b}^{M0}(t)$ de l'expression (14) devient

$$\underline{b}^{M0}(t) = \sum_{m'=M_0+1}^{M} A_{m'} B_{m'} \underline{s}^{m'}{}_L(t) + \boldsymbol{b}(t) = A_b{}^{M0} \underline{s}_b(t) + \boldsymbol{b}(t) \qquad (25)$$

où $A_b{}^{M0} = [A_{M0+1} ... A_M]$ est la matrice des vecteurs directeurs de toutes les sources brouilleurs et $\underline{s}_b(t) = [\{B_{M0+1}\underline{s}^{M0+1}{}_L (t)\}^T... \{ B_M \underline{s}^M{}_L(t)^T\}^T$ est le vecteur des signaux brouilleurs.

Le procédé se retrouve dans un cas multi-utilisateurs et les étapes de l'algorithme de goniométrie par projection sont les suivantes :

**$1^{ier}$ étape :** Calcul de $\hat{R}_{xx} = E[\underline{x}(t) \underline{x}(t)^H]$, $\hat{R}_{xr}{}^u = E[\boldsymbol{x}(t) \underline{r}^u{}_L(t)^H]$ et $\hat{R}_{rr}{}^u = E[\underline{r}^u{}_L(t) \underline{r}^u{}_L(t)^H]$

**$2^{ième}$ étape :** Calcul de la matrice de transfert du canal de propagation $\hat{H}_u = \hat{R}_{xr}{}^u (\hat{R}_{rr}{}^u)^{-1}$

**$3^{ième}$ étape :** Extraction des matrices estimées pour les différents canaux de propagation correspondants aux utilisateurs ou utiles m $\hat{H}_m{}^u$ pour $1 \leq m \leq M_0$ de la matrice $\hat{H}_u$ sachant que $\hat{H}_u = [\hat{H}_1{}^u ... \hat{H}_{M0}{}^u]$

**$4^{ième}$ étape :** Calcul de la matrice de bruit $\hat{R}_{bb}{}^u = \hat{R}_{xx} - \hat{R}_{xr}{}^u (\hat{R}_{rr}{}^u)^{-1} \hat{R}_{xr}{}^{uH}$

**$5^{ième}$ étape :** Application de MUSIC sur $\hat{R}_{bb}{}^u$ et déduction de $A_b{}^{M0}$

**$6^{ième}$ étape :** Calcul de $\Pi_b = I - A_b{}^{M0} (A_b{}^{M0H} A_b{}^{M0})^{-1} A_b{}^{M0H}$

**Pour chaque émetteur m de matrice de transfert $\hat{H}_m{}^u$ . On initialise par m=1:**

**$7^{ième}$ étape :** Calcul de $\hat{R}_{xx}{}^m = \hat{H}_m{}^u \hat{R}_{rr}{}^m \hat{H}_m{}^{uH}$ avec $\hat{R}_{rr}{}^m = E[\underline{r}^m{}_L(t) \underline{r}^m{}_L(t)^H]$

**$8^{ième}$ étape :** Calcul de la matrice $R_{xx}{}^{um} = \Pi_b (\hat{R}_{xx}{}^m) \Pi_b$

**$9^{ième}$ étape :** Application de MUSIC sur $R_{xx}{}^{um}$ avec les vecteurs directeurs $\underline{a}_{pro}(u) = \Pi_b \underline{a}(u)$ pour estimer les incidences $u_{mp}$ pour $1 \leq p \leq P_m$ des multi_trajet du $m^{ième}$ émetteur.

**$10^{ième}$ étape :** m=m+1

**$11^{ième}$ étape :** si $m \leq M_0$ retour à la $7^{ième}$ étape.

A la fin de cette étape le procédé est en possession des incidences $u_{ip}(t_k(i))$ associé au $k^{ième}$ instants du $p^{ième}$ trajet du $i^{ième}$ signal de référence de cette source. Les incidences $u_{ip}(t)$ peuvent soit être des azimuts $\theta_{ip}(t)$ pour une goniométrie 1D soit être le couple de paramètres $(\theta_{ip}(t), \Delta_{ip}(t))$ pour une goniométrie 2D où $\Delta_{ip}(t)$ est l'angle de site.

**Amélioration des résultats de goniométrie**

Les étapes qui ont été décrites précédemment peuvent être améliorées. Généralement, les performances de goniométrie sont inversement proportionnelles à la durée temporelle $\delta t$ du signal de référence. Ainsi pour une durée temporelle du signal d'apprentissage $\delta t'$ égale à $\alpha \delta t$, la précision de la goniométrie est $\sqrt{\alpha}$ plus précise.

Le procédé comporte alors une étape où l'on augmente la durée du signal de référence. Comme le montre la figure 8, le procédé consiste à déduire du signal observé $\underline{x}(t)$ un signal de référence $s_m(t)$ de durée $\delta t'$ plus importante tel que $\delta t' > \delta t$.

Cette valeur $\delta t'$ est déterminée par exemple en fonction de la norme utilisée.

Par exemple, dans la norme GSM, les 8 signaux TSC ont une durée $\delta t = 96\mu s$ et la durée d'un burst d'un

utilisateur est δt'=577μs : Au mieux on peut donc avoir un rapport $\alpha$= δt'/δt=6 et ainsi avoir des goniométries $\sqrt{\alpha}$ =2.5 plus précises.

Pour obtenir ce résultat, le procédé met en oeuvre les étapes suivantes :

Déterminer la séquence de référence

Exécuter l'étape a) en considérant une durée temporelle δt'>δt afin d'obtenir un ou plusieurs signaux de référence $d_m(t)$ pour un ou plusieurs utiles m.

Déterminer un filtre spatial

A partir du signal de référence $d_m(t)$ de durée δt déterminée à l'étape a), du signal reçu $\underline{x}(t)$ par les capteurs, le procédé détermine un filtre spatial Wm tel que $d_m(t)=W_m\underline{x}(t)$

Déterminer le signal $s_m(t)$

Pour déterminer le signal $s_m(t)$ de durée δt ' on réalise tout d'abord un filtrage spatial à partir de la séquence d'apprentissage $d_m(t)$ pour obtenir une estimée $\hat{s}_m(t)$ du signal $s_m(t)$ de durée δt'. Sachant que $S_m(t)$ n'est pas exactement égale à $s_m(t)$ on peut envisager de le transformer en un signal $\hat{\bar{S}}_m(t)$ plus proche de $s_m(t)$.

Suivant les caractéristiques du signal reçu le procédé réalise les améliorations suivantes :

**(a) Démodulation de $\hat{s}_m(t)$ pour les signaux numériques :** Sachant que dans la plupart des cas les caractéristiques des signaux numériques interceptés sont connues, par exemple pour le GSM, l'UMTS, une alternative consiste à démoduler le signal $\hat{s}_m(t)$ pour ensuite remoduler les symboles détectés et obtenir le signal $\hat{\bar{S}}_m(t)$.

**(b) Cas des signaux à module constant** : Sachant que ces signaux ont un module constant égal à 1, $|s_m(t)|=1$, le procédé construit un signal de référence $\hat{\bar{S}}_m(t)$ de la façon suivante : $\hat{\bar{S}}_m(t)=\exp(j\ angle(\hat{s}_m(t)))$ où angle(z) désigne l'argument du complexe z. Selon l'expression (2), ce principe peut s'appliquer en GSM car les symboles sont modulés en une modulation de phase qui est la GMSK.

**(c) Cas des signaux quelconques :** Dans ces conditions la séquence de référence utilisable ne peut être que $\hat{\bar{S}}_m(t)$ tel que $\hat{\bar{S}}_{lm}(t)=\hat{s}_m(t)$.

Détermination du filtre spatial du signal $s_m(t)$

En présence de $M_0$ signaux utiles le signal $\underline{x}(t)$ reçu sur les N capteurs du réseau s'écrit de la façon suivante (26) :

$$\underline{x}(t)=\sum_{m=1}^{M_0} H_m{}^u\ \underline{r}^m{}_L(t)\ +\ \underline{b}^{MO}(t) = H^u\ \underline{r}^u{}_L(t) + \underline{b}^{MO}(t) \quad \text{pour}\quad t_1 \leq t \leq t_1+\delta t$$

$$\underline{r}^u{}_L(t) = \begin{bmatrix} \underline{r}^1{}_L(t) \\ . \\ \underline{r}^{M_0}{}_L(t) \end{bmatrix} \quad \text{et} \quad \underline{r}^m{}_L(t) = \begin{bmatrix} d_m(t-(L/2)Te) \\ . \\ d_m(t+(L/2)Te) \end{bmatrix}$$

Le signal $d_m(t)$ est le signal d'apprentissage du $m^{ième}$ émetteur pour $t_1 \leq t \leq t_1+\delta t$. Le vecteur de référence $\underline{r}^u{}_L(t)$ est donc composé des signaux de références $d_m(t-k)$ des $M_0$ signaux utiles. En supposant que le $m^{ième}$ émetteur transmet un signal $s_m(t)$ comme sur la figure 8 on en déduit, pour tous les instants t :

$$\underline{x}(t) = H_u \ \underline{s}^u{}_L(t) + \underline{b}^{M0}(t) \qquad (27)$$

$$\underline{s}^u{}_L(t) = \begin{bmatrix} \underline{s}^1{}_L(t) \\ \cdot \\ \underline{s}^{M0}{}_L(t) \end{bmatrix} \quad et \ \underline{s}^m{}_L(t) = \begin{bmatrix} s_m(t-(L/2)Te) \\ \cdot \\ s_m(t+(L/2)Te) \end{bmatrix}$$

A partir de la relation (26) le procédé détermine le filtre spatio-temporel W permettant d'estimer $\underline{r}^u{}_L(t)$ à partir de $\underline{x}(t)$. D'après (27) ce même filtre permet d'estimer le signal $\underline{s}^u{}_L(t)$ à partir de $\underline{x}(t)$. En l'absence de bruit et de brouilleurs W vérifie : $\underline{s}^u{}_L(t) = W \ \underline{x}(t)$. Dans ces conditions on estime W à partir de l'équation (26) en minimisant l'écart entre $W \ \underline{x}(t)$ et $\underline{r}^u{}_L(t)$ pour $t_1 \leq t \leq t_1 + \delta t$ :

$$\hat{W} = \hat{R}_{ry}{}^u \ \left( \hat{R}_{xx}{}^u \right)^{-1} \qquad (28)$$

$$avec \ \hat{R}_{rx}{}^u = \frac{1}{\delta t} \sum_{t=t_1}^{t_1+\delta t} \underline{r}^u{}_L(t) \ \underline{x}(t)^H \ et \ \hat{R}_{xx}{}^u = \frac{1}{\delta t} \sum_{t=t_1}^{t_1+\delta t} \underline{x}(t) \ \underline{x}(t)^H$$

On en déduit alors une estimé $\hat{\underline{s}}^u{}_L(t)$ du vecteur de référence $\underline{s}^u{}_L(t)$ pour $t_1' \leq t \leq t_1' + \delta t'$ vérifiant :

$$\hat{\underline{s}}^u{}_L(t) = \hat{W} \ \underline{x}(t) \quad pour \ t_1' \leq t \leq t_1' + \delta t' \qquad 29)$$

$$\hat{\underline{s}}^u{}_L(t) = \begin{bmatrix} \hat{\underline{s}}^1{}_L(t) \\ \cdot \\ \hat{\underline{s}}^{M0}{}_L(t) \end{bmatrix} \quad et \ \hat{\underline{s}}^m{}_L(t) = \begin{bmatrix} \hat{s}_m(t-(L/2)Te) \\ \cdot \\ \hat{s}_m(t+(L/2)Te) \end{bmatrix}$$

Le signal $\hat{s}_m(t)$ est la séquence de référence estimée du $m^{\text{ième}}$ émetteur sur une durée $\delta t'$. Comme indiqué au début de ce paragraphe, cette estimation $\hat{s}_m(t)$ pourra être affinée en la transformant en un signal $\hat{\hat{s}}_m(t)$.

**Transformation d'un cas multi-sources en multi-utilisateurs**

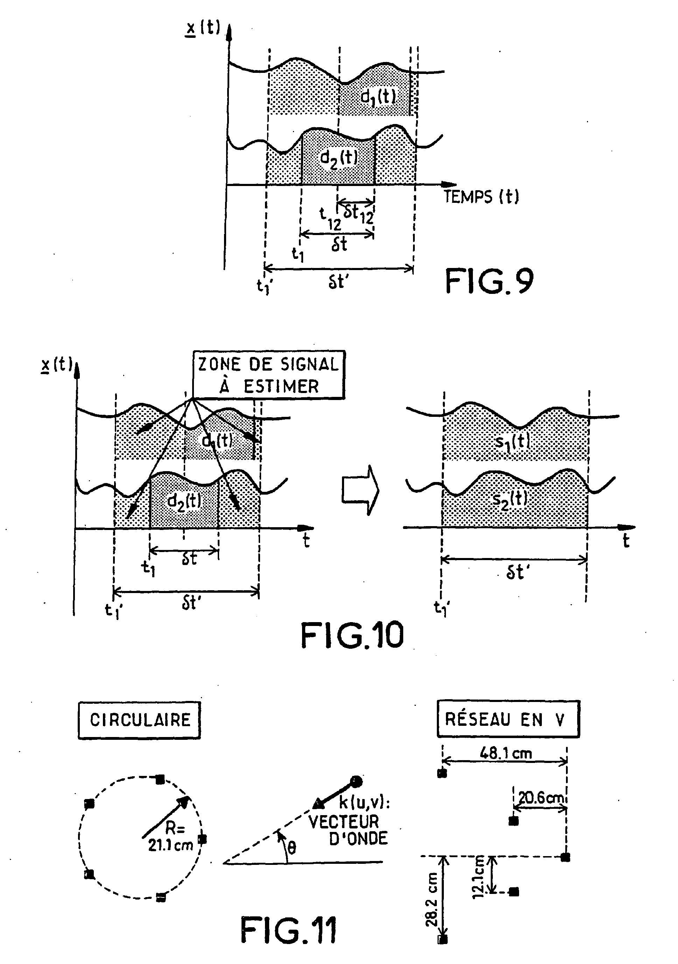

La figure 9 représente la plage temporelle dans laquelle l'algorithme multi-utilisateurs est applicable. Ceci correspond à une durée $\delta t_{12}$ inférieure à la durée $\delta t$ des séquences délimitée par les instants $t_{12}$ et $t_{12} + \delta t_{12}$.

Pour pouvoir appliquer l'algorithme multi-utilisateurs sans diminuer la durée des signaux de références il faut donc estimer les séquences $\hat{\hat{s}}_1(t)$ et $\hat{\hat{s}}_2(t)$ de la figure 10.

Tout d'abord, on estimera en mono-utilisateur les signaux $\hat{\hat{s}}_m(t)$ pour $1 \leq m \leq M_0$ à partir des observations $\underline{x}(t)$ et du signal de référence $d_m(t)$ tel que $\underline{r}^u{}_L(t) = \underline{r}^m{}_L(t)$. Les signaux $\hat{s}_m(t)$ sont donc estimés de façon indépendante.

Comme indiqué précédemment, les $M_0$ estimations pourront être affinées en les transformant en signaux $\hat{\hat{s}}_m(t)$.

Exemples de mise en oeuvre du procédé selon l'invention

La figure 11 représente des résultats obtenus avec deux réseaux plan de N=5 capteurs, comportant un réseau circulaire de rayon R=21.1cm et un réseau en " **V** " . L'azimut θ est l'incidence d'une source dans le plan du réseau et l'angle de site Δ est l'incidence par rapport à la perpendiculaire du plan du réseau. Pour les simulations en (θ,Δ), la goniométrie est réalisée suivant les paramètres (u,v) qui sont les composantes du vecteur d'onde de la source dans le plan du réseau. Ces composantes peuvent s'exprimer sous la forme :

$$u = \cos(\Delta)\cos(\theta) \quad \text{et} \quad v = \cos(\Delta)\sin(\theta) \tag{30}$$

Les deux réseaux sont adaptés à la gamme de fréquence 900MHz-1GHz du GSM. Dans les simulations la fréquence centrale vaut $f_{ant}$=900Mhz et ainsi la longueur d'onde vaut λ=c/ $f_{ant}$ =33.33cm.

On estimera alors les performances de goniométrie soit par rapport au paramètre θ soit par rapport aux paramètres (u,v) suivant que l'on réalise une goniométrie 1D ou 2D. Ces performances sont calculées en terme d'EQM (Erreur Quadratique Moyenne) du paramètre $\theta_m$ ou $(u_m,v_m)$ pour la m$^{ième}$ source. Pour cela on réalise plusieurs goniométries de la source d'incidence $\theta_m$ ou $(u_m,v_m)$ pour estimer à la k$^{ième}$ itération l'incidence $\hat{\theta}_m(k)$ ou $(\hat{v}_m(k),\hat{u}_m(k))$. A chaque itération on garde la même configuration de signal tout en ayant tiré aléatoirement le bruit et les symboles des signaux incidents. En conséquence pour une source d'incidence $\theta_m$ ou $(u_m,v_m)$, les calculs des EQM en 1D et 2D sont les suivants :

$$\textbf{Goniométrie 1D en } \theta : \quad \Delta\theta_{EQM}^m = \sqrt{\frac{1}{nb}\sum_{k=1}^{nb}\left(\hat{\theta}_m(k)-\theta_m\right)^2}$$

$$\textbf{Goniométrie 2D en (u,v) :} \quad \Delta R_{EQM}^m = \sqrt{\frac{1}{nb}\sum_{k=1}^{nb}\left(\hat{u}_m(k)-u_m\right)^2 + \left(\hat{v}_m(k)-v_m\right)^2}$$

Où nb désigne le nombre d'itérations pour calculer les EQM : L'EQM de la m$^{ième}$ source est paramétré par $\Delta\theta\,\Delta\theta_{EQM}^m$ pour la goniométrie 1D et par $\Delta R\,\Delta R_{EQM}^m$ pour la goniométrie 2D.

Pour terminer il faut établir une distance spatiale entre un utile d'incidence $\theta_m$ ou $(u_m,v_m)$ et des brouilleurs d'incidence $\theta_m$ ou $(u_m,v_m)$ pour 2≤m≤M. Cette distance dépend des vecteurs directeurs des sources dont l'expression est donnée par exemple dans le document intitulé « A signal subspace approach to multiple emitters location and spectral estimation » et ayant pour auteur R.O Schmidt PhD Thesis, Stanford University, CA , Nov 1981. En notant par $\underline{a}_m$ le vecteur directeur de la m$^{ième}$ source, cette distance est définie par la projection du vecteur directeur $\underline{a}_1$ de l'utile sur l'espace défini par ceux des brouilleurs $\underline{a}_2...\underline{a}_M$ tel que :

Le scalaire $C_{1/2-M}$ a alors l'expression suivante :

$$c_{1/2\text{-M}} = \sqrt{\frac{\underline{a}_1{}^H \Pi_s(2,...,M)\ \underline{a}_1}{N}} \quad \text{avec } \Pi_s(2,...,M) = A_{2\text{-M}}\,(A_{2\text{-M}}{}^H A_{2\text{-M}})^{-1}A_{2\text{-M}}{}^H$$

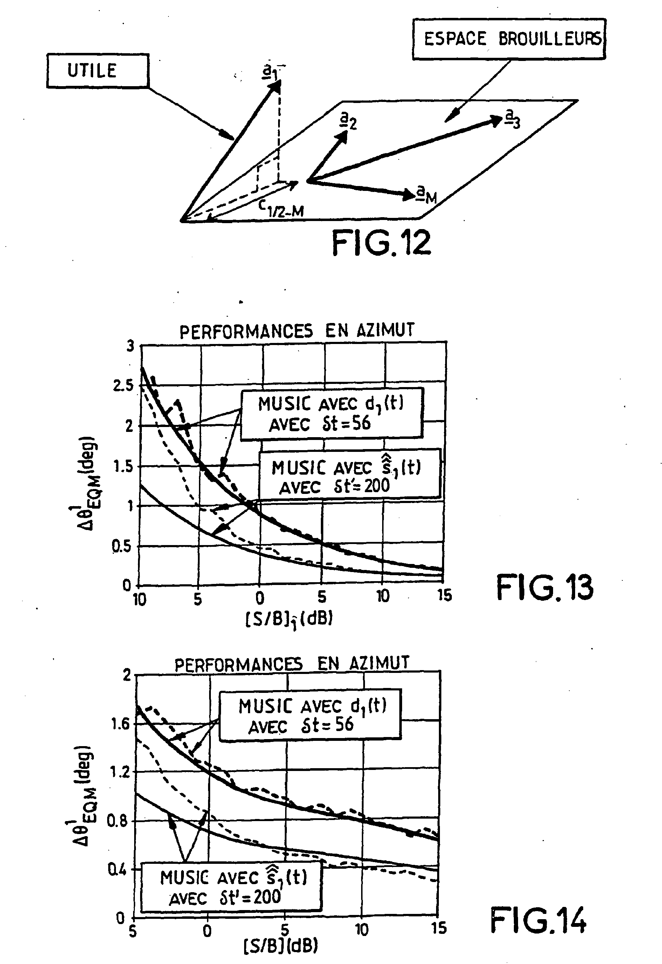

Où $A_{2\text{-M}} = [\ \underline{a}_2...\ \underline{a}_M\ ]$ et $\underline{a}_m{}^H\underline{a}_m = N$ pour 1≤m≤M. Dans ces conditions le paramètre $c_{1/2\text{-M}}$ nommé coefficient de corrélation spatiale varie entre 0 et 1. Lorsque $c_{1/2\text{-M}}$=0 l'utile est orthogonal au plan des brouilleurs et est par conséquent décorrélé spatialement aux brouilleurs. Toutefois quand $c_{1/2\text{-M}}$=1 l'utile est dans le plan des brouilleurs et devient cohérent spatialement aux brouilleurs. Ces configurations de corrélation spatiale entre l'utile et les brouilleurs auront une influence importante sur les performances de goniométrie, (figure 12).

Exemples de simulations avec des signaux du GSM

Dans les simulations de ce paragraphe les signaux $s_m(t)$ sont les modulations GMSK du GSM. Comme le signal émis est à module constant on transforme le signal $\hat{s}_m(t)$ en $\hat{\tilde{s}}_m(t)$ par la méthode (b). Comme précédemment on choisit $\delta t=56$ pour être dans la configuration des signaux TSC à $f_e=600$ kHz. On allongera la durée de la nouveau signal de référence $s_m(t)$ à $\delta t'=200$ afin qu'elle corresponde à la durée approximative d'un burst GSM. Le signal est simulé sur le réseau circulaire à $f_{ant}=900$MHz. Les goniométries sont réalisées en 1D et l'incidence de la 1$^{ière}$ source vaut $\theta_1=45$degrés.

Sur la figure 13 en présence d'une seule source, on compare les performances des algorithmes à référence avec les signaux $d_1(t)$ et $\hat{\tilde{s}}_1(t)$ de durée respective $\delta t=56$ et $\delta t'=200$. On trace en traits pleins les bornes de Cramer Rao associées à ces temps d'intégrations. On donne la précision de goniométrie $\Delta\theta^1_{EQM}$ de la source en fonction de son rapport signal sur bruit $[S/B]_1$.

On constate que la méthode avec le signal connu $d_1(t)$ suit la borne de Cramer Rao tandis que la méthode à référence avec le signal $\hat{\tilde{s}}_1(t)$ suit cette borne au-delà de 0dB. Ainsi au-delà de 0dB la méthode avec $\hat{\tilde{s}}_1(t)$ est $\sqrt{200/56}=1.88$ $\hat{\tilde{s}}$ fois plus précise que la méthode avec $d_1(t)$. En dessous de 0dB la méthode avec la séquence de référence $_1(t)$ est plus précise avec un gain inférieur à 1.88.

La figure 14 schématise les résultats obtenus par simulation du cas d'une source de séquence $d_1(t)$ brouillée par une source sans signal de synchronisation. Le coefficient de corrélation spatiale entre les deux sources vaut $c_{1/2}=0.9$.

Les algorithmes de goniométrie à référence sont donc mono-utilisateur en utilisant suivant la méthode $d_1(t)$ ou $\hat{\tilde{s}}_1(t)$. Les courbes représentent la précision $\Delta\theta^1_{EQM}$ de la goniométrie de la 1$^{ière}$ source en fonction du rapport signal sur bruit $[S/B]$ des deux sources.

On constate que les méthodes à référence utilisant $d_1(t)$ ou $\hat{\tilde{s}}_1(t)$ ont le même comportement que dans le cas de mono-source : La méthode avec $d_1(t)$ suit sa borne de Cramer Rao et celle avec la séquence allongée $\hat{\tilde{s}}_1(t)$ suit cette borne au-delà de 0dB de rapport signal sur bruit. Comme d'un point de vue théorique la borne de Cramer Rao avec $\hat{\tilde{s}}_1(t)$ est 1.88 fois plus précise que celle avec $d_1(t)$, cette dernière simulation montre bien que la méthode avec la séquence de durée $\delta t'$ est plus précise que celle avec la séquence de durée $\delta t$.

Le procédé décrit précédemment s'applique notamment dans un système de transmission comportant un récepteur composé de N capteurs reliés à un dispositif adapté à déterminer les directions d'arrivée des différents signaux tel qu'un goniomètre. Le récepteur comporte un processeur équipé d'un logiciel permettant de mettre en oeuvre les étapes du procédé, pour toutes ses variantes d'application.

**Revendications**

**1.** Procédé de radiogoniométrie coopérative en transmission dans un système de radiogoniométrie pour système de radiocommunication comportant une ou plusieurs sources d'émission ou émetteurs, le signal émis comprenant une séquence de référence composée d'une suite de symboles $\{s_k\}$, le récepteur comportant au moins un réseau de plusieurs capteurs couplés à un radiogoniomètre **caractérisé en ce qu'**il comporte au moins les étapes suivantes :

a) déterminer le ou les signaux de référence $d_i(t)$ associés à un émetteur m à partir des symboles de référence $\{s_k\}$ et de la modulation définie par le format des signaux,
b) définir l'instant d'arrivée $t_k$ d'un ou de plusieurs signaux de référence, $d_i(t)$, à partir du signal $\underline{x}(t)$ reçu sur les capteurs, des instants d'arrivée $t_k$ et du ou des signaux de référence $d_i(t)$ issus de l'étape a), déterminer la ou les incidences ou direction d'arrivée pour un émetteur donné des signaux issues pour un émetteur m donné, estimer la matrice de transfert $H_u=[H_i^u ... H_{M0}^u]$ puis extraire de $H_u$ les matrices $H_m^u$ associées à chacun des Mo émetteurs utiles, le procédé estimant $H_u$ au sens des moindres carré en minimisant l'écart entre $H_u \underline{r}^u_L(t)$

et $\underline{x}$(t) et en réalisant ce moindre carré entre les instants $t_{min}$ et $t_{max}$:

$$\hat{H}_u = \hat{R}_{xr}{}^u \left(\hat{R}_{rr}{}^u\right)^{-1} \qquad (17)$$

avec

$$\hat{R}_{xr}{}^u = \frac{1}{t_{max} - t_{min}} \sum_{t=t_{min}}^{t_{max}} \underline{x}(t)\, \underline{r}^u{}_L(t)^H \quad \text{et} \quad \hat{R}_{rr}{}^u = \frac{1}{t_{max} - t_{min}} \sum_{t=t_{min}}^{t_{max}} \underline{r}^u{}_L(t)\, \underline{r}^u{}_L(t)^H$$

à partir de la matrice $H_u$ estimer la matrice de transfert $H_m^u$ du $m^{iéme}$ émetteur pour en déduire ensuite les incidences dudit émetteur, où $\underline{r}^u L$ (t) représente le vecteur de référence multi-utilisateurs associé.

2. Procédé selon la revendication 1 **caractérisé en ce que** l'étape a) est réitérée autant de fois qu'il y a d'émetteurs $M_0$ dans le système.

3. Procédé selon la revendication 2 **caractérisé en ce qu'**il comporte une étape de séparation des émetteurs $M_0$ en estimant la matrice de transfert du canal de transmission $H^u$ de l'ensemble des émetteurs et en extrayant de cette matrice les matrices de transfert $H_m^u$ du canal associées à un émetteur m afin de déterminer le vecteur d'observation $\underline{x}^m$(t) correspondant.

4. Procédé selon la revendication 3 **caractérisé en ce que** l'étape c) est réalisée par goniométrie par blanchiment mise en oeuvre sur les vecteurs d'obervations $\underline{x}^m$(t).

5. Procédé selon la revendication 3 **caractérisé en ce que** l'étape c) est réalisée par goniométrie par projection.

6. Procédé selon l'une des revendications 1 à 3 **caractérisé en ce que** l'étape de goniométrie utilise l'angle d'azimut $\theta$ correspondant à l'incidence d'une source dans le plan du réseau et/ou l'angle de site $\Delta$ défini comme l'incidence par rapport à la perpendiculaire du plan du réseau.

7. Procédé selon l'une des revendications 1 à 6 **caractérisé en ce que** l'étape a) est effectuée sur une durée $\delta t' > \delta t$, où $\delta t$ est la durée de base du signal de référence.

8. Procédé selon la revendication 7 **caractérisé en ce que** l'on détermine un filtre spatial $W_m$ à partir du signal d'apprentissage $d_m$(t) d'un utile m afin de déduire le signal $s_m$(t) provenant de l'utile avant d'appliquer une étape de goniométrie.

9. Utilisation du procédé selon l'une des revendications 1 à 8 dans des systèmes de radiocommunication pour des signaux de type GSM ou UMTS.

10. Dispositif de radiogoniométrie **caractérisé en ce qu'**il comporte des moyens adaptés pour la mise en oeuvre du procédé selon l'une des revendications 1 à 9.

**Claims**

1. Method of cooperative radio direction-finding in transmission in a radio direction-finding system for a radiocommunication system comprising one or more transmission sources or transmitters, the signal transmitted comprising a reference sequence composed of a series of symbols $\{S_k\}$, the receiver comprising at least one array of several sensors coupled to a radio direction finder, **characterized in that** it comprises at least the following steps:

a) determining the reference signal or signals $d_i$(t) associated with a transmitter m on the basis of the reference symbols $\{S_k\}$ and of the modulation defined by the format of the signals,

**16**

b) defining the instant of arrival $t_k$ of one or more reference signals, $d_i(t)$, on the basis of the signal $\underline{x}(t)$ received on the sensors, of the instants of arrival $t_k$ and of the reference signal or signals $d_i(t)$ arising from step a), determining the incidence or incidences or direction of arrival for a given transmitter of the signals arising for a given transmitter m, estimating the transfer matrix $H_u = LH_1^u...H_{M0}^u]$ and then extracting from $H_u$ the matrices $H_m^u$ associated with each of the $M_0$ useful transmitters, the method estimating $H_u$ in the least squares sense by minimizing the deviation between $H_u \underline{r}^u_L(t)$ and $\underline{x}(t)$ and by computing this least square between the instants $t_{min}$ and $t_{max}$:

$$\hat{H}_u = \hat{R}_{xr}^u \left(\hat{R}_{rr}^u\right)^{-1} \qquad\qquad (17)$$

with

$$\hat{R}_{xr}^u = \frac{1}{t_{max} - t_{min}} \sum_{t=t_{min}}^{t_{max}} \underline{x}(t)\, \underline{r}^u_L(t)^H \quad \text{and} \quad \hat{R}_{rr}^u = \frac{1}{t_{max} - t_{min}} \sum_{t=t_{min}}^{t_{max}} \underline{r}^u_L(t)\, \underline{r}^u_L(t)^H$$

estimating, on the basis of the matrix $H_u$, the transfer matrix $H_m^u$ of the $m^{th}$ transmitter so as thereafter to deduce therefrom the incidences of said transmitter, where $\underline{r}^u_L(t)$ represents the associated multi-user reference vector.

2. Method according to Claim 1 **characterized in that** step a) is repeated as many times as there are transmitters $M_0$ in the system.

3. Method according to Claim 2 **characterized in that** it comprises a step of separating the transmitters $M_0$ by estimating the transfer matrix of the transmission channel $H^u$ of the set of transmitters and by extracting from this matrix the channel transfer matrices $H_m^u$ associated with a transmitter m so as to determine the corresponding observation vector $\underline{x}^m(t)$.

4. Method according to Claim 3 **characterized in that** step c) is carried out by direction finding by whitening implemented on the observation vectors $\underline{x}^m(t)$.

5. Method according to Claim 3 **characterized in that** step c) is carried out by goniometry by projection.

6. Method according to one of Claims 1 to 3 **characterized in that** the direction-finding or goniometry step uses the angle of azimuth $\theta$ corresponding to the incidence of a source in the plane of the array and/or the angle of elevation $\Delta$ defined as the incidence with respect to the perpendicular of the plane of the array.

7. Method according to one of Claims 1 to 6 **characterized in that** step a) is performed over a duration $\delta t' > \delta t$, where $\delta t$ is the basic duration of the reference signal.

8. Method according to Claim 7 **characterized in that** a spatial filter $W_m$ is determined on the basis of the learning signal $d_m(t)$ of a useful m so as to deduce the signal $s_m(t)$ originating from the useful before applying a direction-finding step.

9. Use of the method according to one of Claims 1 to 8 in radiocommunication systems for signals of GSM or UMTS type.

10. Radio direction-finding device **characterized in that** it comprises means adapted for the implementation of the method according to one of Claims 1 to 9.

**Patentansprüche**

1. Verfahren zur Funkpeilung mit kooperativer Übertragung in einem Funkpeilungssystem für ein Funkverkehrssystem, das eine oder mehrere Sendequellen oder Sender aufweist, wobei das gesendete Signal eine Referenzsequenz aufweist, die aus einer Folge von Symbolen $\{S_k\}$ besteht, wobei der Empfänger mindestens ein Netz von mehreren Sensoren aufweist, die mit einem Funkpeiler gekoppelt sind, **dadurch gekennzeichnet, dass** es mindestens die folgenden Schritte aufweist:

a) Bestimmen des oder der einem Sender m zugeordneten Referenzsignale $d_i(t)$ ausgehend von den Referenzsymbolen $\{S_k\}$ und von der durch das Format der Signale definierten Modulation,

b) Definieren des Ankunftszeitpunkts $t_k$ eines oder mehrerer Referenzsignale $d_i(t)$ ausgehend von dem von den Sensoren empfangenen Signal $x(t)$, den Ankunftszeitpunkten $t_k$ und dem oder den aus dem Schritt a) stammenden Referenzsignalen $d_i(t)$, Bestimmen des oder der für einen gegebenen Sender m entstandenen Einfallswinkel oder Ankunftsrichtung für einen gegebenen Sender der Signale, Schätzen der Transfermatrix $H_u = [H_1{}^u \ldots H_{M0}{}^u]$, dann Entnehmen aus $H_u$ der jedem der $M_0$ Nutzsender zugeordneten Matrizen $H_m{}^u$, wobei das Verfahren $H_u$ im Sinne der kleinsten Fehlerquadrate schätzt, indem es die Abweichung zwischen $H_u \underline{r}^u L(t)$ und $\underline{x}(t)$ minimiert und dieses kleinste Fehlerquadrat zwischen den Augenblicken $t_{min}$ und $t_{max}$ herstellt:

$$\hat{H}_u = \hat{R}_{xr}{}^u \left( \hat{R}_{rr}{}^u \right)^{-1} \qquad (17)$$

mit

$$\hat{R}_{xr}{}^u = \frac{1}{t_{max} - t_{min}} \sum_{t=t_{min}}^{t_{max}} \underline{x}(t)\, \underline{r}^u{}_L(t)^H \qquad und \qquad \hat{R}_{rr}{}^u = \frac{1}{t_{max} - t_{min}} \sum_{t=t_{min}}^{t_{max}} \underline{r}^u{}_L(t)\, \underline{r}^u{}_L(t)^H$$

ausgehend von der Matrix $H_u$, Schätzen der Transfermatrix $H_m{}^u$ des m-ten Senders, um daraus die Einfallswinkel des Senders abzuleiten, wobei $\underline{r}^u L(t)$ den zugeordneten Mehrnutzer-Referenzvektor darstellt.

2. Verfahren nach Anspruch 1, **dadurch gekennzeichnet, dass** der Schritt a) ebenso oft wiederholt wird, wie es Sender $M_0$ im System gibt.

3. Verfahren nach Anspruch 2, **dadurch gekennzeichnet, dass** es einen Schritt der Trennung der Sender $M_0$ gibt, indem die Transfermatrix des Übertragungskanals $H^u$ der Gesamtheit der Sender geschätzt wird, und indem aus dieser Matrix die Transfermatrizen $H_m{}^u$ des Kanals entnommen werden, die einem Sender m zugeordnet sind, um den entsprechenden Beobachtungsvektor $\underline{x}^m(t)$ zu bestimmen.

4. Verfahren nach Anspruch 3, **dadurch gekennzeichnet, dass** der Schritt c) durch Funkpeilung mittels Whitening durchgeführt wird, das an den Beobachtungsvektoren $\underline{x}^m(t)$ angewendet wird.

5. Verfahren nach Anspruch 3, **dadurch gekennzeichnet, dass** der Schritt c) durch Projektions-Funkpeilung durchgeführt wird.

6. Verfahren nach einem der Ansprüche 1 bis 3,
   **dadurch gekennzeichnet, dass** der Funkpeilungsschritt den Azimutwinkel $\theta$, der dem Einfallswinkel einer Quelle in die Ebene des Netzes entspricht, und/oder den Elevationswinkel $\Delta$ verwendet, der als der Einfallswinkel bezüglich der Lotrechten der Ebene des Netzes definiert wird.

7. Verfahren nach einem der Ansprüche 1 bis 6,
   **dadurch gekennzeichnet, dass** der Schritt a) über eine Dauer $\delta t' > \delta t$ durchgeführt wird, wobei $\delta t$ die Basisdauer des Referenzsignals ist.

8. Verfahren nach Anspruch 7, **dadurch gekennzeichnet, dass** ein Raumfilter $W_m$ ausgehend vom Lernsignal $d_m(t)$ eines Senders m bestimmt wird, um das vom Sender kommende Signal $s_m(t)$ abzuleiten, ehe ein Funkpeilungsschritt angewendet wird.

9. Verwendung des Verfahrens nach einem der Ansprüche 1 bis 8 in Funkverkehrssystemen für Signale vom Typ GSM oder UMTS.

10. Funkpeilungsvorrichtung, **dadurch gekennzeichnet, dass** sie Mittel aufweist, die für die Durchführung des Verfahrens nach einem der Ansprüche 1 bis 9 geeignet sind.

EP 1 291 664 B1

FIG.1

FIG.2

20

**FIG.3**

**FIG.4**

**FIG.5**

EP 1 291 664 B1

FIG.6

FIG.8

FIG.7

FIG.9

ZONE DE SIGNAL À ESTIMER

FIG.10

CIRCULAIRE

R= 21.1 cm

k(u,v): VECTEUR D'ONDE

θ

RÉSEAU EN V

48.1 cm

20.6 cm

28.2 cm

12.1 cm

FIG.11

FIG.12

PERFORMANCES EN AZIMUT

FIG.13

PERFORMANCES EN AZIMUT

FIG.14

**EP 1 291 664 B1**

## RÉFÉRENCES CITÉES DANS LA DESCRIPTION

**Documents brevets cités dans la description**

- EP 1031847 A
- FR 2764074

- FR 2715488

**Littérature non-brevet citée dans la description**

- **Pierre André Laurent.** Exact and approximate construction of digital phase modulations by superposition of modulated pulse (AMP). *IEEE trans. on communications,* 1986, vol. 34, 150-160